# EUROPEAN PATENT SPECIFICATION

(11) **EP 2 896 674 B1**
(45) Date of publication and mention of the grant of the patent: **01.02.2017**
(21) Application number: 12884487.5
(22) Date of filing: 11.09.2012
(51) Int. Cl.: C09K 11/64, C09K 11/02, C09K 11/68, C09K 11/77

(54) **ZINC ALUMINATE LUMINESCENT MATERIAL AND PREPARATION METHOD THEREOF**
ZINKALUMINATLEUCHTSTOFF UND HERSTELLUNGSVERFAHREN DAFÜR
SUBSTANCE LUMINESCENTE À BASE D'ALUMINATE DE ZINC ET SON PROCÉDÉ DE PRÉPARATION

(43) Date of publication of application: 22.07.2015
(73) Proprietor: Ocean's King Lighting Science&Technology Co., Ltd., Guangdong 518054 (CN); Shenzhen Ocean's King Lighting Engineering Co. Ltd., Guangdong 518054 (CN)
(72) Inventor: ZHOU, Mingjie, Shenzhen Guangdong 518054 (CN); WANG, Rong, Shenzhen Guangdong 518054 (CN)
(74) Representative: Michalski Hüttermann & Partner Patentanwälte mbB
(86) International application number: PCT/CN2012/081253
(87) International publication number: WO 2014/040229

(56) References cited:
- WO-A1-2010/098426
- WO-A1-2011/153715
- WO-A1-2011/156955
- CN-A- 101 899 308
- CN-A- 102 337 116
- JP-A- 2008 208 325
- TSHABALALA K G ET AL: "Luminescent properties and X-ray photoelectron spectroscopy study of ZnAlO:Ce,Tbphosphor", JOURNAL OF ALLOYS AND COMPOUNDS, ELSEVIER SEQUOIA, LAUSANNE, CH, vol. 509, no. 41, 10 August 2011 (2011-08-10), pages 10115-10120, XP028296150, ISSN: 0925-8388, DOI: 10.1016/J.JALLCOM.2011.08.054 [retrieved on 2011-08-19]

## Description

### FIELD OF THE INVENTION

The present disclosure relates to luminescent materials, and more particularly relates to a zinc aluminate luminescent material and a preparation method thereof.

### BACKGROUND OF THE INVENTION

Field emission display (FED) is a flat panel display technology having a great development potential. While the operating voltage of field emission display device is lower than that of the cathode ray tube (CRT), the operating current density of FED is relatively larger, e.g., about 10 to 100µA·cm⁻². Accordingly, the fluorescent material for the field emission display requires a higher demand, such as better chromaticity, higher luminous efficiency at low voltage, and no brightness saturation phenomena at high current densities.

Currently, the study on FED mainly focuses on two aspects: one is to use and modify the existing fluorescent material for CRT; another is to search for new fluorescent material. The commercial available fluorescent material for CRT is usually based on sulfide, however, when it is used for manufacturing FED, sulfur may reacts with trace molybdenum, silicon or germanium contained in the cathode due to the instability of sulfides, which weakens the electron emission, resulting a weak FED luminous intensity.

### SUMMARY OF THE INVENTION

Accordingly, it is necessary to address the problem of low luminous intensity of the conventional luminescent materials and to provide a zinc aluminate luminescent material having a higher luminous intensity and preparation method thereof.

A zinc aluminate luminescent material has a general molecular formula of

Zn₁₋ₓAl₂O₄:A³⁺ₓ@Al₂O₃@M_{y},

wherein A is selected from the group consisting of Cr, Eu, Tb, and Ce;
M is at least one metal nanoparticles selected from the group consisting of Ag, Au, Pt, Pd, and Cu;
0<x≤0.1;
y is a molar ratio between M and the sum of the molar mass of A1 in Zn₁₋ₓAl₂O₄:A³⁺ₓ and A1 in Al₂O₃@M_{y}, 0<y≤1×10⁻²;
@ represents coating; the zinc aluminate luminescent material uses M as a core, Al₂O₃ as an inner shell, and Zn₁₋ₓAl₂O₄:A³⁺ₓ as an outer shell.

In one embodiment, 0.0005≤x≤0.05.

In one embodiment, 1×10⁻⁵≤y≤5×10⁻³.

A method of preparing a zinc aluminate luminescent material includes the following steps:
preparing a sol containing M, wherein M is at least one metal nanoparticles selected from the group consisting of Ag, Au, Pt, Pd and Cu;
surface-treating the sol containing M, adding a solution containing Al³⁺, stirring, adding a precipitating agent, reacting at a temperature ranging from 0°C to 100°C to form a precipitate, filtering, washing, drying, and calcining the precipitate to obtain Al₂O₃ powder coating M;
mixing compounds containing Zn and A, and the Al₂O₃ powder coating M according to a stoichiometry ratio in a molecular formula of Zn₁₋ₓAl₂O₄:A³⁺ₓ@Al₂O₃@M_{y} to obtain a mixture, wherein A is selected from the group consisting of Cr, Eu, Tb, and Ce; 0<x≤0.1; y is a ratio between the molar amount of M and a sum of the molar amount of Al in Zn₁₋ₓAl₂O₄:A³⁺ₓ and A1 in Al₂O₃@M_{y}, 0<y≤1× 10⁻²; and
grinding and mixing the mixture, calcining the mixture, cooling and grinding to obtain the zinc aluminate luminescent material having a general molecular formula of Zn₁₋ₓAl₂O₄:A³⁺ₓ@Al₂O₃@M_{y}, wherein @ represents coating; the zinc aluminate luminescent material uses M as a core, Al₂O₃ as an inner shell, and Zn₁₋ₓAl₂O₄:A³⁺ₓ as an outer shell.

In one embodiment, the preparing the sol containing M includes:
mixing and reacting a salt solution of at least one of Ag, Au, Pt, Pd, and Cu, an additive, and a reducing agent for 10 minutes to 45 minutes to obtain the sol containing M nanoparticles;
a concentration of the salt solution of at least one of Ag, Au, Pt, Pd, and Cu ranges from 1×10⁻³mol/L to 5×10⁻²mol/L;
the additive is at least one selected from the group consisting of polyvinyl pyrrolidone, sodium citrate, cetyl trimethyl ammonium bromide, sodium lauryl sulfate, and sodium dodecyl sulfate;
a concentration of additive in the sol containing M ranges from 1×10⁻⁴g/mL to 5×10⁻²g/mL;
the reducing agent is at least one selected from the group consisting of hydrazine hydrate, ascorbic acid, sodium citrate, and sodium borohydride;
a molar ratio of the reducing agent to a metal ion in the salt solution of at least one of Ag, Au, Pt, Pd, and Cu ranges from 3.6:1 to 18:1.

In one embodiment, the surface-treating the sol containing M includes:
adding the sol containing M to a polyvinyl pyrrolidone aqueous solution having a concentration of 0.005g/mL to 0.1g/mL and stirring for 12 to 24 hours.

In one embodiment, the method further includes: adding a surfactant prior to the adding of the precipitating agent and after stirring.

In one embodiment, the solution containing Al³⁺ is selected from the group consisting of aluminum sulfate solution, aluminum nitrate solution, and aluminum chloride solution; the surfactant is selected from the group consisting of polyethylene glycol, ethylene glycol, isopropyl alcohol, and polyvinyl alcohol; the precipitating agent is selected from the group consisting of ammonium bicarbonate, ammonia, ammonium carbonate, and urea.

In one embodiment, the method further includes: aging for 2 hours to 12 hours prior to the filtering and after the forming the precipitate.

In one embodiment, the calcining the precipitate to obtain Al₂O₃ powder coating M includes: calcining the precipitate at a temperature of 500°C to 1200°C for 1 hour to 8 hours.

In one embodiment, the calcining the ground mixture includes: calcining the mixture at a temperature of 800°C to 1400°C for 2 hours to 15 hours, then calcining the mixture at a temperature of 1000°C to 1400°C for 0.5 hour to 6 hours under a mixed reducing atmosphere of nitrogen and hydrogen, a reducing atmosphere of carbon or a reducing atmosphere of hydrogen.

The zinc aluminate luminescent material uses at least one metal nanoparticles Ag, Au, Pt, Pd, and Cu as the core, Al₂O₃ as the inner shell, and Zn₁₋ₓAl₂O₄:A³⁺ₓ as the outer shell, thus forming a core-shell structure. The prior art application WO2011/153715 A1 discloses an yttrium oxide phosphor represented by the chemical formula:Y2O3:Re, M, Zn1-xAlxO; wherein Re is at least one selected from Eu and Tb, M is at least one selected from the group consisting Ag, Au, Pt and Pd in the form of nano-particle.

### BRIEF DESCRIPTION OF THE DRAWINGS

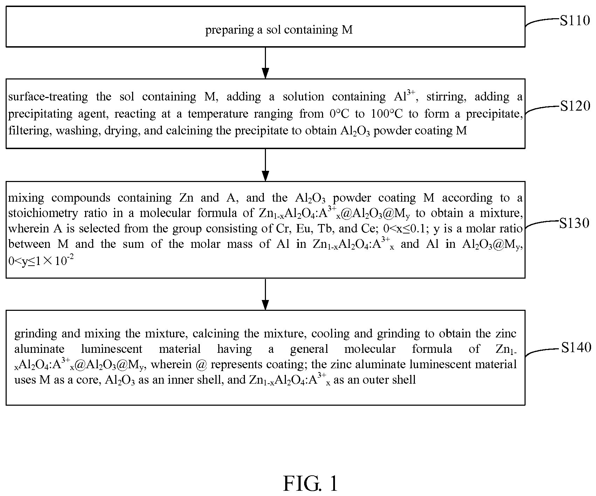

FIG. 1 is a flow chart of a method of preparing a zinc aluminate oxide luminescent material in accordance with one embodiment;
FIG. 2 is a graphical representation of cathodoluminescence spectrum under a voltage of 1.5kV of the zinc aluminate luminescent material of Zn_{0.99}Al₂O₄:Tb³⁺_{0.01}@Al₂O₃@Ag_{2.5×10}-4 prepared in accordance with Example 3 and the zinc aluminate luminescent material of Zn_{0.99}Al₂O₄:Tb³⁺_{0.01}@Al₂O₃ without coating metal nanoparticles.

### DETAILED DESCRIPTION OF THE EMBODIMENTS

Reference will now be made to the drawings to describe, in detail, embodiments of the present zinc aluminate luminescent material and preparation method thereof.

An embodiment of a zinc aluminate luminescent material is provided having a general molecular formula of

Zn₁₋ₓAl₂O₄:A³⁺ₓ@Al₂O₃@M_{y},

wherein A is selected from the group consisting of chromium (Cr), europium (Eu), terbium (Tb), and cerium (Ce);
M is at least one metal nanoparticles selected from the group consisting of silver (Ag), gold (Au), platinum (Pt), palladium (Pd) and copper (Cu);
0<x≤0.1; preferably 0.0005≤x≤0.05.
y is a molar ratio between M and the sum of the molar mass of A1 in Zn₁₋ₓAl₂O₄:A³⁺ₓ and Al in Al₂O₃@M_{y}, 0<y≤1×10⁻²; preferably 1×10⁻⁵≤y≤5×10⁻³;
@ represents coating; the zinc aluminate luminescent material uses M as a core, Al₂O₃ as an inner shell, and Zn₁₋ₓAl₂O₄:A³⁺ₓ as an outer shell.

In the general molecular formula of Zn₁₋ₓAl₂O₄:A³⁺ₓ@Al₂O₃@M_{y}, ":" represents doping, i.e. ZnAl₂O₄ serves as a luminescent substrate, A serves as the doping element, and trivalent A ion is an activate ion of the luminescent material. The outer shell of Zn_{1-X}Al₂O₄:A³⁺ₓ is formed by doping A into the ZnAl₂O₄ and replacing partial Zn in the ZnAl₂O₄.

Zinc aluminate (ZnAl₂O₄) is a kind of wide band gap semiconductor material having a cubic spinel structure. The optical band gap of ZnAl₂O₄ polycrystalline powder is generally about 318 to 319 eV, thus it has excellent chemical and thermal stability. Since the aluminum zinc analogues Zn₁₋ₓAl₂O₄ is used as the substrate material of the outer shell, the zinc aluminate luminescent material exhibits a high stability.

Since M serves as a core of the zinc aluminate luminescent material, it can cause the surface plasmon resonance effect, so as to improve the internal quantum efficiency of the zinc aluminate luminescent material.

The zinc aluminate luminescent material uses at least one metal nanoparticles Ag, Au, Pt, Pd, and Cu as the core, Al₂O₃ as the inner shell, and Zn₁₋ₓAl₂O₄:A³⁺ₓ as the outer shell, thus forming a core-shell structure. The metal nanoparticles can improve the internal quantum efficiency of the luminescent material, such that the luminous intensity of the zinc aluminate luminescent material is increased.

This zinc aluminate luminescent material has such advantages as good stability, good luminous performance, thus it can be widely applied in the field of display and lighting applications.

Comparing to the conventional sulfide luminescent materials, this zinc aluminate luminescent material does not produce toxic sulfide during use, thus it is environmentally friendly, non-toxic, and safe to use.

A method of preparing a zinc aluminate luminescent material includes the following steps:
In step S110, a sol containing M is prepared.

M is at least one metal nanoparticles selected from the group consisting of Ag, Au, Pt, Pd, and Cu.

The step of preparing the sol containing M includes: mixing and reacting a salt solution of at least one of Ag, Au, Pt, Pd, and Cu, an additive, and a reducing agent to obtain the sol containing M nanoparticles. In order to guarantee that the sol containing M is obtained, the reaction time is preferably ranged from 10 to 45 minutes to save energy.

The salt solution of Ag, Au, Pt, Pd, and Cu can be a chloride solution, a nitrate solution or the like of the Ag, Au, Pt, Pd, and Cu. The concentration of the salt solution of Ag, Au, Pt, Pd, and Cu can be determined according to the actual needs, preferably ranges from 1×10⁻³mol/L to 5×10⁻²mol/L.

The additive is at least one selected from the group consisting of polyvinyl pyrrolidone, sodium citrate, cetyl trimethyl ammonium bromide, sodium lauryl sulfate, and sodium dodecyl sulfate. The concentration of additive in the sol containing M ranges from 1×10⁻⁴g/mL to 5×10⁻²g/mL.

The reducing agent is at least one selected from the group consisting of hydrazine hydrate, ascorbic acid, sodium citrate, and sodium borohydride. The reducing agent is firstly formulated into an aqueous solution with a concentration of 1×10⁻⁴mol/L to 1mol/L, then is mixed and reacted with the salt solution of at least one of Ag, Au, Pt, Pd, and Cu, and the additive.

A molar ratio of the reducing agent to a metal ion in the salt solution of at least one of Ag, Au, Pt, Pd, and Cu ranges from 3.6:1 to 18:1.

Under the effect of the reducing agent and additives, Ag, Au, Pt, Pd or Cu ions are reduced to Ag, Au, Pt, Pd or Cu metal nanoparticles and dispersed in a solvent, such that the sol containing M is obtained.

In step S120, the sol containing M is surface-treated, a solution containing Al³⁺ is added, after stirring, a precipitating agent is added, the reaction is carried out at a temperature ranging from 0°C to 100°C to form a precipitate, the precipitate is filtered, washed, dried, and calcined to obtain Al₂O₃ powder coating M.

For ease of coating, the sol containing M obtained from the step S110 is firstly surface-treated to form a stable Al₂O₃ powder coating M, referred hereafter as Al₂O₃@M.

Specifically, the step of surface-treating the sol containing M includes: adding the sol containing M to a polyvinyl pyrrolidone (PVP) aqueous solution having a concentration of 0.005g/ml to 0.1g/ml and stirring for 12 to 24 hours.

The solution containing Al³⁺ is selected from the group consisting of aluminum sulfate solution (Al₂(SO₄)₃), aluminum nitrate solution (Al(NO₃)₃), and aluminum chloride solution (AlCl₃).

The precipitating agent is selected from the group consisting of ammonium bicarbonate (NH₄HCO₃), ammonia (NH₃·H₂O), ammonium carbonate ((NH₄)₂CO₃), and urea (CON₂H₄).

The surface-treated sol containing M is added with the solution containing Al³⁺, after well stirring, the precipitating agent is added slowly with stirring, the reaction is carried out in a 0°C to 100°C water bath to form a precipitate. The reaction time is preferably from 1.5 hours to 5 hours to complete the generation of the precipitate.

Al³⁺ ion can react with the precipitating agent to produce Al(OH)₃, which takes a form of colloid. Since the hydroxyls of Al(OH)₃ have a high activity, the firstly generated Al(OH)₃ colloid can bind metal and coat the metal inside, next, the subsequently generated Al(OH)₃ will be deposited on the surface of the colloid particles. The hydroxyl bound to the surface of the colloid particle will be dehydrated and form an Al-O-Al band and binding points. Along with the hydrolysis, Al(OH)₃ will continuously bind to the binding points, and an Al₂O₃ coating layer is formed by dehydration and condensation, such that Al₂O₃@M is obtained.

Preferably, prior to adding the precipitating agent and after stirring, a surfactant is added.

Before adding the surfactant, the sol containing M maintains stable mainly by electrostatic repulsion between particles. The added surfactant can be used to prevent agglomeration of the particles, thus further improving the stability of the particles.

The surfactant can form a molecular film on the surface of the colloid particles to prevent contacting between the particles, and the molecular film can reduce the surface tension and the capillary adsorption, and reduce the steric effect, such that the purpose of preventing agglomeration can be achieved. After the particle is bound with the surfactant, the bonding effect of -OH of the surface of the colloid particles can be reduced, thus further improving the dispersion of the colloid, and reducing the agglomeration of particles.

The surfactant is selected from the group consisting of polyethylene glycol (PEG), ethylene glycol (EG), isopropyl alcohol (IPA), and polyvinyl alcohol ([C₂H₄O]ₙ). Preferably, the polyethylene glycol is polyethylene glycol 100-20000 (PEG100-20000), more preferably polyethylene glycol 2000-10000 (PEG2000-10000).

The polyethylene glycol with a molecular weight of 2000 to 10000 has an appropriate viscosity, such that PEG2000-10000 can easily form a strong hydrogen bond with the surface of the particles, and a macromolecular hydrophilic film is formed on the surface of the particles, so that the dispersion particles is improved, and the aggregation of particles is reduced.

Preferably, after the reaction is completed, the precipitate is aged for 2 to 12 hours, such that the generated precipitated crystal particles can grow up, and the precipitate becomes more pure and is easy for separation.

After aging, the precipitate is obtained by filtering. The precipitate is then washed, dried, and calcined at a temperature of 500°C to 1200°C for 1 to 8 hours to obtain Al₂O₃ powder, which coats M.

In step S130, compounds containing Zn and A, and the Al₂O₃ powder coating M are mixed according to a stoichiometry ratio in a molecular formula of Zn₁₋ₓAl₂O₄:A³⁺ₓ@Al₂O₃@M_{y} to obtain a mixture, wherein A is selected from the group consisting of Cr, Eu, Tb, and Ce; 0<x≤0.1; y is a ratio between the molar amount of M and a sum of the molar amount of Al in Zn₁₋ₓAl₂O₄:A³⁺ₓ and A1 in Al₂O₃@M_{y}, 0<y≤1× 10⁻².

The compounds containing Zn and A can be oxides, carbonates, acetates or oxalates corresponding to Zn and Mn. For example, the compounds containing Zn can be zinc oxide (ZnO), zinc oxalate (ZnC₂O₄•2H₂O), and the like; the compounds containing A can be chromium oxalate hexahydrate (Cr₂(C₂O₄)₃·6H₂O), Europium carbonate (Eu₂(CO₃)₃), and the like.

The compounds containing Zn and A, and the Al₂O₃@M powder are mixed according to a stoichiometric ratio of formula of Zn₁₋ₓAl₂O₄: A³⁺ₓ@Al₂O₃@M_{y} to obtain a mixture, which will be used for subsequent reaction.

In step S140, the mixture is ground, well mixed, calcined, cooled and ground again to obtain the zinc aluminate luminescent material having a general molecular formula of Zn₁₋ₓAl₂O₄:A³⁺ₓ@Al₂O₃@M_{y}, wherein @ represents coating; the zinc aluminate luminescent material uses M as a core, Al₂O₃ as an inner shell, and Zn₁₋ₓAl₂O₄:A³⁺ₓ as an outer shell.

The mixture obtained in step S130 is well ground, then is calcined at a temperature of 800°C to 1400°C for 2 to 15 hours. Next, the mixture is reduced under a mixed reducing atmosphere of nitrogen and hydrogen, a carbon reducing atmosphere or a hydrogen reducing atmosphere at a temperature of 1000°C to 1400°C for 0.5 to 6 hours.

The zinc aluminate luminescent material of Zn₁₋ₓAl₂O₄:A³⁺ₓ@Al₂O₃@M_{y} is obtained by calcining, cooling, and grinding, in which @ represents coating; the zinc aluminate luminescent material uses M as a core, Al₂O₃ as an inner shell, and Zn₁₋ₓAl₂O₄:A³⁺ₓ as an outer shell.

The grinding and mixing of the mixture of compounds containing Zn and A, and the Al₂O₃@M powder before calcining can enable a fully reaction. The mixture is calcined, cooled, and ground again to obtain the zinc aluminate luminescent material with a smaller particle size and more uniform particle size distribution.

The forgoing preparing method of the zinc aluminate luminescent material is simple, low equipment requirement, no pollution, easy to control, and suitable for industrial production.

Detailed examples are described below.

### Example 1

This example describes a process of preparation of Zn_{0.99}Al₂O₄: Cr³⁺_{0.0005}@Al₂O₃@Pd_{1×10}-₅ by using high-temperature solid-phase method.

Preparation of sol containing Pd nanoparticles was described below.

0.22mg of palladium chloride (PdCl₂ • 2H₂O) was dissolved in 19mL of deionized water. After the palladium chloride was fully dissolved, 11.0mg of sodium citrate and 4.0mg of sodium lauryl sulfate were weighed and dissolved into the palladium chloride aqueous solution under magnetic stirring. 3.8mg of sodium borohydride was weighed and dissolved into 10mL of deionized water to obtain a sodium borohydride reducing solution with a concentration of 1×10⁻²mol/L. Under magnetic stirring, 1mL of sodium borohydride solution with a concentration of 1×10⁻²mol/L was fast added to the palladium chloride aqueous solution. After reaction for 20 minutes, 20mL of sol containing Pd nanoparticles was obtained with a Pd content of 5×10⁻⁵mol/L.

Preparation of Al₂O₃@Pd was described below.

0.20g of polyvinylpyrrolidone was dissolved in 4mL of deionized water under a room temperature, 2.4mL of 5×10⁻⁵mol/L of sol containing Pd nanoparticles was added and stirred for 12 hours, 6mL of 1mol/L of Al₂(SO₄)₃ solution and 10mL of 10% (V/V) of PEG100 aqueous solution were added with stirring, 20 mL of 2mol/L of urea was then slowly added dropwise. The mixed solution was stirred and reacted in a water bath at 100°C for 2.5 hours, aged for 2 hours, filtered, washed, dried, and heat-treated at 1200°C for 1 hour to obtain Al₂O₃ powder coating Pd, referred hereafter as Al₂O₃@Pd.

Preparation of Zn_{0.99}Al₂O₄: Cr³⁺_{0.0005}@Al₂O₃@Pd_{1×10}-₅ was described below.

0.7573g of zinc oxalate (ZnC₂O₄·2H₂O), 0.4078g of Al₂O₃@Pd, 0.0009g of chromium oxalate hexahydrate (Cr₂(C₂O₄)₃·6H₂O) were weighed and placed in an agate mortar, sufficient ground to form well mixed powder. The powder was transferred to a corundum crucible, heated at 1400°C for 2 hours in a muffle furnace. Next, the powder was sintered at 1400°C for 0.5 hour, then cooled to room temperature and ground to obtain zinc aluminate luminescent material of Zn_{0.99}Al₂O₄: Cr³⁺_{0.0005}@Al₂O₃@Pd_{1×10}-₅ coating Pd nanoparticles.

### Example 2

This example describes a process of preparation of Zn_{0.98}Al₂O₄:Eu³⁺_{0.02}@Al₂O₃@Au_{1.5×10}-4 by using high-temperature solid-phase method.

Preparation of sol containing Au nanoparticles was described below.

2.1mg of chloroauric acid (AuCl₃ • HCl • 4H₂O) was dissolved in 16.8mL of deionized water. After the chloroauric acid was fully dissolved, 14mg of sodium citrate and 6mg of cetyl trimethyl ammonium bromide were weighed and dissolved into the chloroauric acid aqueous solution under magnetic stirring. 1.9mg of sodium borohydride and 17.6mg of ascorbic acid were weighed and dissolved into 10mL of deionized water, respectively, to obtain a 10mL of sodium borohydride solution with a concentration of 1×10⁻²mol/L and a 10mL of ascorbic acid solution with a concentration of 1×10⁻²mol/L. Under magnetic stirring, 0.08mL of sodium borohydride solution was firstly added to the chloroauric acid aqueous solution, after stirring for 5 minutes, 3.12 mL of ascorbic acid solution with a concentration of 1×10⁻²mol/L was then added to the chloroauric acid aqueous solution. After reaction for 30 minutes, 20mL of sol containing Au nanoparticles was obtained with an Au content of 5×10⁻⁴mol/L.

Preparation of Al₂O₃@Au was described below.

0.5g of PVP was dissolved in 10mL of deionized water under a room temperature, 10.8mL of 5×10⁻⁴mol/L of sol containing Au nanoparticles was added and stirred for 24 hours, 6mL of 0.5mol/L of Al₂(SO₄)₃ solution and 5mL of 5% (V/V) of PEG20000 aqueous solution were added with stirring, 20 mL of 3mol/L of urea was then slowly added dropwise. The mixed solution was stirred and reacted in a water bath at 80°C for 1.5 hours, aged for 12 hours, filtered, washed, dried, and heat-treated at 800°C for 2 hours to obtain Al₂O₃ powder coating Au, referred hereafter as Al₂O₃@Au.

Preparation of Zn_{0.98}Al₂O₄:Eu³⁺_{0.02}@Al₂O₃@Au_{1.5×10}-4 was described below.

0.3073g of zinc carbonate (ZnCO₃), 0.2549g of Al₂O₃@Au, 0.0121g of europium carbonate (Eu₂(CO₃)₃) were weighed and placed in an agate mortar, sufficient ground to form well mixed powder. The powder was transferred to a corundum crucible, heated at 800°C for 15 hours in a muffle furnace. Next, the powder was sintered at 1000°C for 4 hours, then cooled to room temperature and ground to obtain zinc aluminate luminescent material of Zn_{0.98}Al₂O₄:Eu³⁺_{0.02}@Al₂O₃@Au_{1.5×10}-4 coating Au nanoparticles.

### Example 3

This example describes a process of preparation of Zn_{0.99}Al₂O₄:Tb³⁺_{0.01}@Al₂O_{3@}Ag_{2.5×10}-4 by using high-temperature solid-phase method.

Preparation of sol containing Ag nanoparticles was described below.

3.4mg of silver nitrate (AgNO₃) was dissolved in 18.4mL of deionized water. After the silver nitrate was fully dissolved, 42mg of sodium citrate was weighed and dissolved into the silver nitrate aqueous solution under magnetic stirring. 5.7mg of sodium borohydride was weighed and dissolved into 10mL of deionized water to obtain a 10mL of sodium borohydride solution with a concentration of 1.5×10⁻²mol/L. Under magnetic stirring, 1.6mL of sodium borohydride solution (1.5×10⁻²mol/L) was added to the silver nitrate aqueous solution. After reaction for 10 minutes, 20mL of sol containing Ag nanoparticles was obtained with an Ag content of 1×10⁻³mol/L.

Preparation of Al₂O₃@Ag was described below.

0.1g of polyvinylpyrrolidone was dissolved in 4mL of deionized water under a room temperature, 3mL of 1×10⁻³mol/L of sol containing Ag nanoparticles was added and stirred for 12 hours, 12mL of 1mol/L of Al(NO₃)₃ solution and 6mL of 4% (V/V) of polyvinyl alcohol aqueous solution were added with stirring, NH₃·H₂O was then slowly added dropwise under vigorous stirring until pH=9. The mixed solution was stirred and reacted for 3 hours, aged for 6 hours, filtered, washed, dried, and heat-treated at 900°C for 4 hours to obtain Al₂O₃ powder coating Ag, referred hereafter as Al₂O₃@Ag.

Preparation of Zn_{0.99}Al₂O₄:Tb³⁺_{0.01}@Al₂O₃@Ag_{2.5×10}-4 was described below.

0.3223g of zinc oxide (ZnO), 0.4078g of Al₂O₃@Ag, 0.0074g of terbium oxide (Tb₄O₇) were weighed and placed in an agate mortar, sufficient ground to form well mixed powder. The powder was transferred to a corundum crucible, heated at 1250°C for 4 hours in a muffle furnace. Next, the powder was sintered and reduced at 1200°C in a tube furnace under a weak reducing atmosphere of 95%N₂+5%H₂ for 2 hours, then cooled to room temperature and ground to obtain zinc aluminate luminescent material of Zn_{0.99}Al₂O₄:Tb³⁺_{0.01}@Al₂O₃@Ag_{2.5×10}-4 coating Ag nanoparticles.

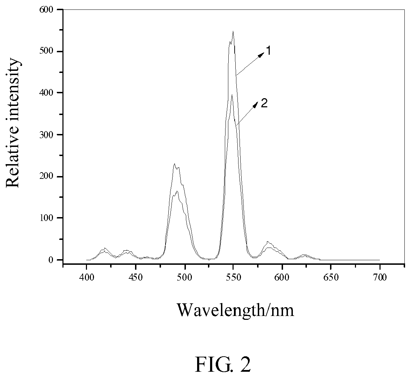

FIG. 2 is a graphical representation of cathodoluminescence spectrum under a voltage of 1.5kV of the zinc aluminate luminescent material of Zn_{0.99}Al₂O₄:Tb³⁺_{0.01}@Al₂O₃@Ag_{2.5×10}-4 coating Ag nanoparticles prepared in accordance with Example 3, and the zinc aluminate luminescent material of Zn_{0.99}Al₂O₄:Tb³⁺_{0.01}@Al₂O₃ without coating metal nanoparticles. It can be seen from FIG. 2 that, at an emission peak of 544nm, the emission intensity of zinc aluminate luminescent material of Zn_{0.99}Al₂O₄:Tb³⁺_{0.01}@Al₂O₃@Ag_{2.5×10}-4 coating Ag nanoparticles is enhanced by 38% comparing to zinc aluminate luminescent material of Zn_{0.99}Al₂O₄:Tb³⁺_{0.01}@Al₂O₃ without coating metal nanoparticles. Accordingly, the zinc aluminate luminescent material according to Example 3 has a good stability, good color purity and high luminous efficiency.

### Example 4

This example describes a process of preparation of Zn_{0.95}Al₂O₄:Eu³⁺_{0.05}@Al₂O₃@Pt_{5×10}-3 by using high-temperature solid-phase method.

Preparation of sol containing Pt nanoparticles was described below.

103.6mg of chloroplatinic acid (H₂PtCl₆•6H₂O) was dissolved in 17mL of deionized water. After the chloroplatinic acid was fully dissolved, 40.0mg of sodium citrate and 60.0mg of sodium lauryl sulfate were weighed and dissolved into the chloroplatinic acid aqueous solution under magnetic stirring. 1.9mg of sodium borohydride was weighed and dissolved into 10mL of deionized water to obtain 10 mL of sodium borohydride aqueous solution with a concentration of 5×10⁻³mol/L. 10mL of hydrazine hydrate solution (5×10⁻² mol/L) was prepared at the same time. Under magnetic stirring, 0.4mL of sodium borohydride solution was added dropwise to the chloroplatinic acid aqueous solution and stirred for 5 minutes, then 2.6mL of hydrazine hydrate (5×10⁻²mol/L) was added dropwise to the chloroplatinic acid aqueous solution. After reaction for 40 minutes, 10mL of sol containing Pt nanoparticles was obtained with a Pt content of 1×10⁻²mol/L.

Preparation of Al₂O₃@Pt was described below.

0.30g of polyvinylpyrrolidone (PVP) was dissolved in 5mL of deionized water under a room temperature, 6mL of 1×10⁻²mol/L of sol containing Pt nanoparticles was added and stirred for 18 hours, 12mL of 1mol/L of AlCl₃ solution and 5mL of isopropanol were added with stirring, 30 mL of 4mol/L of NH₄HCO₃ was then slowly added dropwise. The mixed solution was stirred and reacted for 5 hours, aged for 4 hours, filtered, washed, dried, and heat-treated at 500°C for 8 hour to obtain Al₂O₃ powder coating Pt, referred hereafter as Al₂O₃@Pt.

Preparation of Zn_{0.95}Al₂O₄:Eu³⁺_{0.05}@Al₂O₅@Pt_{5×10}-3 was described below.

0.8341g of zinc acetate (Zn(CH₃COO)₂·2H₂O), 0.4078g of Al₂O₃@Pt, 0.0658g of europium acetate (Eu(CH₃COO)₃) were weighed and placed in an agate mortar, sufficient ground to form well mixed powder. The powder was transferred to a corundum crucible, heated at 1100°C for 10 hours in a muffle furnace. Next, the powder was sintered at 1000°C for 6 hours, then cooled to room temperature and ground to obtain zinc aluminate luminescent material of Zn_{0.95}Al₂O₄:Eu³⁺_{0.05}@Al₂O₃@Pt_{5×10}-3 coating Pt nanoparticles.

### Example 5

This example describes a process of preparation of Zn_{0.98}Al₂O₄:Ce³⁺_{0.01},Tb³⁺_{0.01}@Al₂O₃@Cu_{1×10}-4 by using high-temperature solid-phase method.

Preparation of sol containing Cu nanoparticles was described below.

2.4mg of copper nitrate was dissolved in 16mL of ethanol. After the copper nitrate was fully dissolved, 12mg of PVP was added with stirring. 0.4mg of sodium borohydride was dissolved into 10mL of ethanol to obtain a sodium borohydride alcoholic solution with a concentration of 1×10⁻³mol/L. 4mL of sodium borohydride alcoholic solution was added dropwise to the copper nitrate solution. After stirring and reacting for 10 minutes, 20mL of sol containing Cu nanoparticles was obtained with a Cu content of 6×10⁻⁴mol/L.

Preparation of Al₂O₃@Cu was described below.

0.18g of PVP was dissolved in 8mL of deionized water under a room temperature, 2mL of 6×10⁻⁴mol/L of sol containing Cu nanoparticles was added and stirred for 24 hours, 6mL of 2mol/L of AlCl₃ solution and 8mL of 5% (V/V) of PEG10000 were added with stirring, 15 mL of 3mol/L of NH₄HCO₃ was then slowly added dropwise. The mixed solution was stirred and reacted in a 60°C water bath for 5 hours, aged for 10 hours, filtered, washed, dried, and heat-treated at 600°C for 6 hours to obtain Al₂O₃ powder coating Cu, referred hereafter as Al₂O₃@Cu.

Preparation of Zn_{0.98}Al₂O₄:Ce³⁺_{0.01},Tb³⁺_{0.01}@Al₂O₃@Cu_{1×10}-4 was described below.

0.3191g of zinc oxide (ZnO), 0.4078g of Al₂O₃@Cu, 0.0069g of cerium oxide (CeO₂) and 0.0074g of terbium oxide (Tb₄O₇) were weighed and placed in an agate mortar, sufficient ground to form well mixed powder. The powder was transferred to a corundum crucible, heated at 1100°C for 10 hours in a muffle furnace. Next, the powder was sintered and reduced at 1000°C in a tube furnace under a pure H₂ reducing atmosphere for 6 hours, then cooled to room temperature and ground to obtain zinc aluminate luminescent material of Zn_{0.98}Al₂O₄:Ce³⁺_{0.01},Tb³⁺_{0.01@}Al₂O₃@Cu_{1×10}-4 coating Cu nanoparticles.

### Example 6

This example describes a process of preparation of Zn_{0.9}Al₂O₄:Eu³⁺_{0.1}@Al₂O_{3@}(Ag_{0.5}/Au_{0.5})_{1.25×10}-3 by using high-temperature solid-phase method.

Preparation of sol containing Ag_{0.5}/Au_{0.5} nanoparticles was described below.

6.2mg of chloroauric acid (AuCl₃•HCl•4H₂O) and 2.5mg of AgNO₃ were dissolved in 28mL of deionized water. After they were fully dissolved, 22mg of sodium citrate and 20mg of PVP were weighed and added to the mixture solution under magnetic stirring. 5.7mg of sodium borohydride was dissolved into 10mL of deionized water to obtain a sodium borohydride aqueous solution with a concentration of 1.5×10⁻²mol/L. 2mL of sodium borohydride aqueous solution (1.5×10⁻²mol/L) was added to the mixture solution. After stirring and reacting for 20 minutes, 30mL of sol containing Ag_{0.5}/Au_{0.5} nanoparticles was obtained with a sum metal (Ag+Au) content of 1×10⁻³mol/L.

Preparation of Al₂O₃@(Ag_{0.5}/Au_{0.5}) was described below.

0.25g of PVP was dissolved in 6mL of deionized water under a room temperature, 10mL of 1×10⁻³mol/L of sol containing Ag_{0.5}/Au_{0.5} nanoparticles was added and stirred for 24 hours, 8mL of 1mol/L of AlCl₃ solution and 5mL of glycol were added with stirring, 20 mL of 5mol/L of (NH₄)₂CO₃ was then slowly added dropwise. The mixed solution was stirred and reacted in a 70°C water bath for 3 hours, aged for 4 hours, filtered, washed, dried, and heat-treated at 900°C for 3 hours to obtain Al₂O₃ powder coating Ag and Au, referred hereafter as Al₂O₃@(Ag_{0.5}/Au_{0.5}).

Preparation of Zn_{0.9}Al₂O₄:Eu³⁺_{0.1}@Al₂O₃@(Ag_{0.5}/Au_{0.5})_{1.25×10}-3 was described below.

1.0709g of zinc nitrate (Zn(NO₃)₂·6H₂O), 0.4078g of Al₂O₃@(Ag_{0.5}/Au_{0.5}), 0.1784g of europium nitrate (Eu(NO₃)₃•6H₂O) were weighed and placed in an agate mortar, sufficient ground to form well mixed powder. The powder was transferred to a corundum crucible, heated at 1000°C for 15 hours in a muffle furnace. Next, the powder was sintered at 1000°C for 4 hours, then cooled to room temperature and ground to obtain zinc aluminate luminescent material of Zn_{0.9}Al₂O₄:Eu³⁺_{0.1}@Al₂O₃@(Ag_{0.5}/Au_{0.5})_{1.25×10}-3 coating Ag and Au nanoparticles.

## Claims

1. A zinc aluminate luminescent material having a general molecular formula of
Zn₁₋ₓAl₂O₄:A³⁺ₓ@Al₂O₃@M_{y},
wherein A is selected from the group consisting of Cr, Eu, Tb, and Ce;
M is at least one metal nanoparticles selected from the group consisting of Ag, Au, Pt, Pd, and Cu;
0<x≤0.1;
y is a molar ratio between M and the sum of the molar mass of Al in Zn₁₋ₓAl₂O₄:A³⁺ₓ and Al in Al₂O₃@M_{y}, 0<y≤1 × 10⁻²;
@ represents coating; the zinc aluminate luminescent material uses M as a core, Al₂O₃ as an inner shell, and Zn₁₋ₓAl₂O₄:A³⁺ₓ as an outer shell.

2. The zinc aluminate luminescent material according to claim 1, wherein 0.0005≤x≤0.05.

3. The zinc aluminate luminescent material according to claim 1, wherein 1×10⁻⁵≤y≤5×10⁻³.

4. A method of preparing a zinc aluminate luminescent material, comprising the following steps:
preparing a sol containing M, wherein M is at least one metal nanoparticles selected from the group consisting of Ag, Au, Pt, Pd and Cu;
surface-treating the sol containing M, adding a solution containing Al³⁺, stirring, adding a precipitating agent, reacting at a temperature ranging from 0°C to 100°C to form a precipitate, filtering, washing, drying, and calcining the precipitate to obtain Al₂O₃ powder coating M;
mixing compounds containing Zn and A, and the Al₂O₃ powder coating M according to a stoichiometry ratio in a molecular formula of Zn₁₋ₓAl₂O₄:A³⁺ₓ@Al₂O₃@M_{y} to obtain a mixture, wherein A is selected from the group consisting of Cr, Eu, Tb, and Ce; 0<x≤0.1;
y is a ratio between the molar amount of M and a sum of the molar amount of Al in Zn₁₋ₓAl₂O₄:A³⁺ₓ and Al in Al₂O₃@M_{y}, 0<y≤1 × 10⁻²; and
grinding and mixing the mixture, calcining the mixture, cooling and grinding to obtain the zinc aluminate luminescent material having a general molecular formula of Zn₁₋ₓAl₂O₄:A³⁺ₓ@Al₂O₃@M_{y}, wherein @ represents coating; the zinc aluminate luminescent material uses M as a core, Al₂O₃ as an inner shell, and Zn₁₋ₓAl₂O₄:A³⁺ₓ as an outer shell.

5. The method of preparing the zinc aluminate luminescent material according to claim 4, wherein the preparing the sol containing M comprises:
mixing and reacting a salt solution of at least one of Ag, Au, Pt, Pd, and Cu, an additive, and a reducing agent for 10 minutes to 45 minutes to obtain the sol containing M nanoparticles;
a concentration of the salt solution of at least one of Ag, Au, Pt, Pd, and Cu ranges from 1×10⁻³mol/L to 5×10⁻²mol/L;
the additive is at least one selected from the group consisting of polyvinyl pyrrolidone, sodium citrate, cetyl trimethyl ammonium bromide, sodium lauryl sulfate, and sodium dodecyl sulfate;
a concentration of additive in the sol containing M ranges from 1×10⁻⁴g/mL to 5×10⁻²g/mL;
the reducing agent is at least one selected from the group consisting of hydrazine hydrate, ascorbic acid, sodium citrate, and sodium borohydride;
a molar ratio of the reducing agent to a metal ion in the salt solution of at least one of Ag, Au, Pt, Pd, and Cu ranges from 3.6:1 to 18:1.

6. The method of preparing the zinc aluminate luminescent material according to claim 4, wherein the surface-treating the sol containing M comprises:
adding the sol containing M to a polyvinyl pyrrolidone aqueous solution having a concentration of 0.005g/mL to 0.1g/mL and stirring for 12 to 24 hours.

7. The method of preparing the zinc aluminate luminescent material according to claim 4, further comprising adding a surfactant prior to the adding of the precipitating agent and after stirring.

8. The method of preparing the zinc aluminate luminescent material according to claim 7, wherein the solution containing Al³⁺ is selected from the group consisting of aluminum sulfate solution, aluminum nitrate solution, and aluminum chloride solution; the surfactant is selected from the group consisting of polyethylene glycol, ethylene glycol, isopropyl alcohol, and polyvinyl alcohol; the precipitating agent is selected from the group consisting of ammonium bicarbonate, ammonia, ammonium carbonate, and urea.

9. The method of preparing the zinc aluminate luminescent material according to claim 4, further comprising aging for 2 hours to 12 hours prior to the filtering and after the forming the precipitate.

10. The method of preparing the zinc aluminate luminescent material according to claim 4, wherein the calcining the precipitate to obtain Al₂O₃ powder coating M comprises: calcining the precipitate at a temperature of 500°C to 1200°C for 1 hour to 8 hours.

11. The method of preparing the zinc aluminate luminescent material according to claim 4, wherein the calcining the ground mixture comprises: calcining the mixture at a temperature of 800°C to 1400°C for 2 hours to 15 hours, then calcining the mixture at a temperature of 1000°C to 1400°C for 0.5 hour to 6 hours under a mixed reducing atmosphere of nitrogen and hydrogen, a reducing atmosphere of carbon or a reducing atmosphere of hydrogen.

## Patentansprüche

1. Zinkaluminat-Lumineszenzmaterial mit der allgemeinen Summenformel
Zn₁₋ₓAl₂O₄:A³⁺ₓ@Al₂O₃@M_{y},
wobei A aus der Gruppe bestehend aus Cr, Eu, Tb und Ce ausgewählt ist,
M Metall-Nanopartikel sind, die aus mindestens einem aus der Gruppe bestehend aus Ag, Au, Pt, Pd und Cu ausgewählten Metall bestehen;
0 < x ≦ 0,1 ist,
y ein Molverhältnis zwischen M und der Summe der molaren Masse von Al in Zn₁₋ₓAl₂O₄:A³⁺ₓ und Al in Al₂O₃@M_{y} bezeichnet, wobei 0 < y ≦ 1×10⁻² ist,
@ eine Beschichtung darstellt, wobei das Zinkaluminat-Lumineszenz-material M als Kern, Al₂O₃ als eine innere Schale und Zn₁₋ₓAl₂O₄:A³⁺ₓ als eine äußere Schale aufweist.

2. Zinkaluminat-Lumineszenzmaterial nach Anspruch 1, wobei 0,0005 ≦ x ≦ 0,05 ist.

3. Zinkaluminat-Lumineszenzmaterial nach Anspruch 1, wobei 1×10⁻⁵ ≦ y ≦ 5×10⁻³ ist.

4. Verfahren zum Herstellung eines Zinkaluminat-Lumineszenzmaterials, mit den folgenden Schritten:
Herstellen eines Sols, das M enthält, wobei M Metall-Nanopartikel bezeichnet, die aus mindestens einem aus der Gruppe bestehend aus Ag, Au, Pt, Pd und Cu ausgewählten Metall bestehen;
Oberflächenbehandeln des Sols, das M enthält, Zugeben einer Lösung, die Al³⁺ enthält, Rühren, Zugeben eines Fällungsmittels, Veranlassen einer Reaktion bei einer Temperatur im Bereich von 0°C bis 100°C, um eine Ausfällung herzustellen, Filtrieren, Waschen, Trocknen und Kalzinieren der Ausfällung, um eine Al₂O₃-Pulverbeschichtung auf M zu erhalten;
Mischen von Verbindungen, die Zn und A enthalten, und der Al₂O₃-Pulverbeschichtung auf M gemäß einem stöchiometrischen Verhältnis in einer Summenformel Zn₁₋ₓAl₂O₄:A³⁺ₓ@Al₂O₃@M_{y}, um ein Gemisch zu erhalten, wobei A aus der Gruppe bestehend aus Cr, Eu, Tb und Ce ausgewählt ist, wobei 0 < x ≦ 0,1 ist und y ein Verhältnis zwischen der molaren Menge von M und einer Summe der molaren Menge von Al in Zn₁₋ₓA₂O₄:A³⁺ₓ und Al in Al₂O₃@M_{y} bezeichnet, wobei 0 < y ≦ 1×10⁻² ist; und
Mahlen und Mischen des Gemischs, Kalzinieren des Gemischs, Kühlen und Mahlen, um das Zinkaluminat-Lumineszenzmaterial mit der allgemeinen Summenformel Zn₁₋ₓAl₂O₄:A³⁺ₓ@Al₂O₃@M_{y} zu erhalten, wobei @ eine Beschichtung darstellt, wobei das Zinkaluminat-Lumineszenzmaterial M als einen Kern, Al₂O₃ als eine innere Schale und Zn₁₋ₓAl₂O₄:A³⁺ₓ als eine äußere Schale aufweist.

5. Verfahren nach Anspruch 4, wobei das Herstellen des Sols, das M enthält, aufweist:
Mischen und Veranlassen einer Reaktion einer Salzlösung mindestens eines Elements unter Ag, Au, Pt, Pd und Cu, eines Additivs und eines Reduktionsmittels für 10 Minuten bis 45 Minuten, um das Sol zu erhalten, das M-Nanopartikel enthält,
wobei eine Konzentration der Salzlösung mindestens eines Elements unter Ag, Au, Pt, Pd und Cu im Bereich von 1×10⁻³ mol/l bis 5×10⁻² mol/l liegt,
das Additiv mindestens eine aus der Gruppe bestehend aus Polyvinylpyrrolidon, Natriumcitrat, Cetyltrimethylammoniumbromid, Natriumlaurylsulfat und Natriumdodecylsulfat ausgewählte Komponente ist,
die Konzentration des Additivs in dem Sol, das M enthält, im Bereich von 1×10⁻⁴ g/ml bis 5×10⁻² g/ml liegt,
das Reduktionsmittel mindestens eine aus der Gruppe bestehend aus Hydrazinhydrat, Ascorbinsäure, Natriumcitrat und Natriumborhydrid ausgewählte Komponente ist, und
das Molverhältnis des Reduktionsmittels zu einem Metallion in der Salzlösung mindestens eines Elements unter Ag, Au, Pt, Pd und Cu im Bereich von 3,6:1 bis 18:1 liegt.

6. Verfahren nach Anspruch 4, wobei die Oberflächenbehandlung des Sols, das M enthält, aufweist:
Zugeben des Sols, das M enthält, zu einer wässrigen Polyvinylpyrrolidonlösung mit einer Konzentration von 0,005 g/ml bis 0,1 g/ml und Rühren für 12 bis 24 Stunden.

7. Verfahren nach Anspruch 4, ferner mit dem Zugeben eines oberflächenaktiven Mittels vor der Zugabe des Fällungsmittels und nach dem Rühren.

8. Verfahren nach Anspruch 7, wobei die Lösung, die Al³⁺ enthält, aus der Gruppe bestehend aus einer Aluminiumsulfatlösung, einer Aluminiumnitratlösung und einer Aluminiumchloridlösung ausgewählt wird, das oberflächenaktive Mittel aus der Gruppe bestehend aus Polyethylenglykol, Ethylenglykol, Isopropylalkohol und Polyvinylalkohol ausgewählt wird, und das Fällungsmittel aus der Gruppe bestehend aus Ammoniumbicarbonat, Ammoniak, Ammoniumcarbonat und Harnstoff ausgewählt wird.

9. Verfahren nach Anspruch 4, ferner mit dem Altern für 2 Stunden bis 12 Stunden vor dem Filtrieren und nach dem Herstellen der Ausfällung.

10. Verfahren nach Anspruch 4, wobei das Kalzinieren der Ausfällung zum Erhalten der Al₂O₃-Pulverbeschichtung auf M (Al₂O₃@M) das Kalzinieren der Ausfällung bei einer Temperatur von 500°C bis 1200°C für 1 Stunde bis 8 Stunden aufweist.

11. Verfahren nach Anspruch 4, wobei das Kalzinieren des gemahlenen Gemischs aufweist: Kalzinieren des Gemischs bei einer Temperatur von 800°C bis 1400°C für 2 Stunden bis 15 Stunden und anschließendes Kalzinieren des Gemischs bei einer Temperatur von 1000°C bis 1400°C für 0,5 Stunden bis 6 Stunden unter einer reduzierenden Mischatmosphäre aus Stickstoff und Wasserstoff, einer reduzierenden Kohlenstoffatmosphäre oder einer reduzierenden Wasserstoffatmosphäre.

## Revendications

1. Matériau luminescent d'aluminate de zinc ayant une formule moléculaire générale de
Zn₁₋ₓAl₂O₄:A³⁺ₓ@Al₂0₃@M_{y},
dans lequel A est choisi dans le groupe constitué par Cr, Eu, Tb, et Ce ;
M est au moins une nanoparticule métallique choisie dans le groupe constitué par Ag, Au, Pt, Pd, et Cu ;
0<x≤0,1 ;
y est un rapport molaire entre M et la somme de la masse molaire de Al dans Zn₁₋ₓAl₂O₄:A³⁺ₓ et Al dans Al₂0₃@M_{y}, 0<y≤1×10⁻² ;
@ représente un revêtement ; le matériau luminescent d'aluminate de zinc utilise M comme un noyau, Al₂O₃ comme une enveloppe interne, et Zn₁₋ₓAl₂O₄:A³⁺x comme une enveloppe externe.

2. Matériau luminescent d'aluminate de zinc selon la revendication 1, dans lequel 0,0005≤x≤0,05.

3. Matériau luminescent d'aluminate de zinc selon la revendication 1, dans lequel 1×10⁻⁵≤y≤5×10⁻³.

4. Procédé de préparation d'un matériau luminescente d'aluminate de zinc, comprenant les étapes suivantes:
préparation d'un sol contenant M, dans lequel M est au moins une nanoparticule métallique choisie dans le groupe constitué par Ag, Au, Pt, Pd et Cu ;
traitement en surface du sol contenant M, ajout d'une solution contenant Al³⁺, agitation, ajout d'un agent de précipitation, réaction à une température allant de 0°C à 100°C pour former un précipité, filtration, lavage, séchage, et calcination du précipité pour obtenir un revêtement en poudre d'Al₂O₃ sur M ;
mélange de composés contenant Zn et A, et le revêtement en poudre d'Al₂O₃ sur M selon un rapport stoechiométrique dans une formule moléculaire de Zn₁₋ₓAl₂O₄:A³⁺ₓ@Al₂0₃@M_{y} pour obtenir un mélange, dans lequel A est choisi dans le groupe constitué par Cr, Eu, Tb, et Ce ;
0<x≤0,1 ; y est un rapport entre la quantité molaire de M et une somme de la quantité molaire de Al dans Zn₁₋ₓAl₂O₄:A³⁺ₓ et Al dans Al₂0₃@My, 0<y≤1×10⁻² ; et
broyage et mélange du mélange, calcination du mélange, refroidissement et broyage pour obtenir le matériau luminescent d'aluminate de zinc ayant une formule générale moléculaire de Zn₁₋ₓAl₂O₄:A³⁺ₓ@Al₂0₃@M_{y}, dans lequel @ représente un revêtement ; le matériau luminescent d'aluminate de zinc utilise M comme un noyau, Al₂O₃ comme une enveloppe interne, et Zn₁₋ₓAl₂O₄:A³⁺ₓ comme une enveloppe externe.

5. Procédé de préparation du matériau luminescent d'aluminate de zinc selon la revendication 4, dans lequel la préparation du sol contenant M comprend:
le mélange et la réaction d'une solution saline d'au moins un élément parmi Ag, Au, Pt, Pd, et Cu, un additif, et un agent réducteur pendant 10 minutes à 45 minutes pour obtenir le sol contenant des nanoparticules de M ;
une concentration de la solution saline d'au moins un élément parmi Ag, Au, Pt, Pd, et Cu est de 1×10⁻³ mol/L à 5×10⁻² mol/L ;
l'additif est au moins un élément choisi dans le groupe constitué par la polyvinylpyrrolidone, le citrate de sodium, le bromure de cétyltriméthylammonium, le laurylsulfate de sodium, et le dodécylsulfate de sodium ;
une concentration d'additif dans le sol contenant M est de 1×10⁻⁴ g/mL à 5×10⁻² g/mL ;
l'agent réducteur est au moins un élément choisi dans le groupe constitué par l'hydrate d'hydrazine, l'acide ascorbique, le citrate de sodium, et le borohydrure de sodium ;
un rapport molaire de l'agent réducteur à un ion métallique dans la solution saline d'au moins un élément parmi Ag, Au, Pt, Pd, et Cu est de 3,6:1 à 18:1.

6. Procédé de préparation du matériau luminescent d'aluminate de zinc selon la revendication 4, dans lequel le traitement de surface du sol contenant M comprend:
l'ajout du sol contenant M à une solution aqueuse de polyvinylpyrrolidone ayant une concentration de 0,005 g/ml à 0,1 g/ml et l'agitation pendant 12 à 24 heures.

7. Procédé de préparation du matériau luminescent d'aluminate de zinc selon la revendication 4, comprenant en outre l'ajout d'un tensioactif avant l'ajout de l'agent de précipitation et après agitation.

8. Procédé de préparation du matériau luminescent d'aluminate de zinc selon la revendication 7, dans lequel la solution contenant Al³⁺ est choisie dans le groupe constitué par une solution de sulfate d'aluminium, une solution de nitrate d'aluminium, et une solution de chlorure d'aluminium ; le tensioactif est choisi dans le groupe constitué par un polyéthylèneglycol, un éthylèneglycol, un alcool isopropylique, et un alcool polyvinylique ; l'agent de précipitation est choisi dans le groupe constitué par un bicarbonate d'ammonium, l'ammoniac, un carbonate d'ammonium, et l'urée.

9. Procédé de préparation du matériau luminescent d'aluminate de zinc selon la revendication 4, comprenant en outre un vieillissement de 2 heures à 12 heures avant la filtration et après la formation du précipité.

10. Procédé de préparation du matériau luminescent d'aluminate de zinc selon la revendication 4, dans lequel la calcination du précipité pour obtenir le revêtement en poudre d'Al₂O₃ sur M comprend : la calcination du précipité à une température de 500°C à 1200°C pendant 1 heure à 8 heures.

11. Procédé de préparation du matériau luminescent d'aluminate de zinc selon la revendication 4, dans lequel la calcination du mélange broyé comprend : la calcination du mélange à une température de 800°C à 1400°C pendant 2 heures à 15 heures, puis la calcination du mélange à une température de 1000°C à 1400°C pendant 0,5 heure à 6 heures sous une atmosphère réductrice mixte d'azote et d'hydrogène, une atmosphère réductrice de carbone ou une atmosphère réductrice d'hydrogène.
